# EUROPÄISCHE PATENTSCHRIFT

(11) **EP 3 661 717 B1**
(45) Veröffentlichungstag und Bekanntmachung des Hinweises auf die Patenterteilung: **08.09.2021**
(21) Anmeldenummer: 18739571.0
(22) Anmeldetag: 19.07.2018
(51) Int. Cl.: B29C 43/02, B29C 33/42, B29C 59/02, B29C 37/00, B29L 31/30, B29K 105/08, B29K 101/12, B29C 43/52

(54) **VERFAHREN ZUR ERZEUGUNG EINER STRUKTURIERTEN NARBUNG AUF DER OBERFLÄCHE EINES MIT EINEM TEXTILEN FLÄCHENGEBILDE ENDLOSFASERVERSTÄRKTEN THERMOPLASTEN**
METHOD FOR PRODUCING A STRUCTURED GRAINED SURFACE ON A FIBER-REINFORCED THERMOPLASTIC CONTAINING TEXTILE CONTINUOUS FIBER REINFORCEMENTS
PROCEDE DE REALISATION D'UN GAUFRAGE A LA SURFACE D'UN THERMOPLASTIQUE RENFORCE PAR UN TEXTILE A FIBRES CONTINUES

(30) Priorität: 31.07.2017 EP 17184105
(43) Veröffentlichungstag der Anmeldung: 10.06.2020
(73) Patentinhaber: BASF SE, 67056 Ludwigshafen (DE)
(72) Erfinder: DIEHLMANN, Tim, 67056 Ludwigshafen (DE); RADTKE, Andreas, 67056 Ludwigshafen (DE); SCHNEIDER, Ulrich, 67056 Ludwigshafen (DE); JAKOBI, Reinhard, 67056 Ludwigshafen (DE)
(86) Internationale Anmeldenummer: PCT/EP2018/069676
(87) Internationale Veröffentlichungsnummer: WO 2019/025204

(56) Entgegenhaltungen:
- EP-A1- 2 955 014
- DE-A1- 10 054 490
- JP-A- 2010 253 714
- US-A1- 2014 186 584

## Beschreibung

Die vorliegende Erfindung betrifft ein Verfahren zur Erzeugung einer strukturierten Narbung auf der Oberfläche eines mit einem textilen Flächengebilde endlosfaserverstärkten Thermoplasten, in dem ein Gemisch aus mindestens einem Fasermaterial und mindestens einem Thermoplasten in einem Werkzeug auf eine Temperatur oberhalb der Erweichungstemperatur des Thermoplasten erhitzt und verpresst wird, wobei auf der Innenseite des Werkzeugs eine strukturierte Narbung angebracht ist. Das mindestens eine Fasermaterial enthält Endlosfasern und liegt in Form eines regelmäßig angeordneten textilen Flächengebildes vor. Die strukturierte Narbung auf der Innenseite des Werkzeugs und das textile Flächengebilde werden so zueinander ausgerichtet, dass sich beim Verpressen das textile Flächengebilde und die strukturierte Narbung auf der Innenseite des Werkzeugs überlagern, wobei die regelmäßig angeordnete strukturierte Narbung so auf die Innenseite des Werkzeugs angebracht ist, dass sie auf der Sichtseite des endlosfaserverstärkten Thermoplasten eine strukturierte Narbung erzeugt, und wobei die strukturierte Narbung in dem Werkzeug durch Ätzen, Laserstrukturierung, Sandstrahlen, Formfräsen oder Erodieren hergestellt wird, wodurch die Innenseite des Werkzeugs eine Oberfläche mit Vertiefungen und/oder Erhöhungen aufweist. Nach dem Verpressen wird das Gemisch aus dem mindestens einen Fasermaterial und dem mindestens einen Thermoplasten im Werkzeug auf eine Temperatur unterhalb der Erweichungstemperatur des Thermoplasten abgekühlt unter Bildung der strukturierten Narbung auf der Oberfläche des Thermoplasten. Ein weiterer Gegenstand der vorliegenden Erfindung ist ein mit einem textilen Flächengebilde endlosfaserverstärkter Thermoplast mit einer strukturierten Narbung auf der Oberfläche, der nach dem erfindungsgemäßen Verfahren erhalten wird.

Bauteile aus faserverstärkten Thermoplasten sind insbesondere für Leichtbauanwendungen in der Luft- und Raumfahrt oder im Automobilsektor von großem Interesse aufgrund ihrer hohen Energieabsorption und spezifischen Steifigkeit sowie Festigkeit bei vergleichsweise niedrigem Gewicht, ihrer guten Umformbarkeit und Lagerfähigkeit. Die Festigkeit und Steifigkeit werden dabei vor allem durch die Art und Anordnung des unterstützenden Fasermaterials bestimmt. Der Thermoplast dient in solchen Bauteilen als unterstützende Matrix für das Fasermaterial und schützt das Fasermaterial vor äußeren physikalischen und chemischen Einflüssen.

Für Bauteile aus faserverstärkten Thermoplasten ist der Einsatz im Sichtbereich eines Fahrzeugs aber auch problematisch, da die Oberflächentextur aufgrund des Fasermaterials Unebenheiten aufweist und damit den Qualitätsanforderungen an das Bauteil nicht genügt.

So offenbart beispielsweise M. Blinzler in "Oberflächentexturen bei gewebeverstärkten Thermoplasten", Kunststoffe 11/1999, Seiten 128 - 130, dass die Gewebeverstärkung eines Thermoplasten an der Oberfläche eine deutlich sichtbare Textur erzeugt, welche durch Lackierung zwar einen hohen Glanzgrad aufweist, aber gleichzeitig die Unregelmäßigkeiten auf der Oberfläche noch besser sichtbar macht.

Oberflächen von faserverstärkten Thermoplasten zeigen in der Regel auch eine Faserdurchzeichnung, die aus der ungleichmäßigen Verteilung von Fasermaterial und thermoplastischem Material resultiert. Durch die höhere Schrumpfung des thermoplastischen Materials gegenüber dem Fasermaterial beim Abkühlen, entstehen zudem auch weitere Oberflächendefekte.

M. Blinzler, "Werkstoff- und prozessseitige Einflussmöglichkeiten zur Optimierung der Oberflächenqualität endlosfaserverstärkter Kunststoffe", Dissertation, TU Kaiserslautern, 2002, Seiten 12, 13, 46, 47, 120 und 121, offenbart unterschiedliche Vorgehensweisen für Deckschichten auf lackierten Bauteilen aus endlosfaserverstärkten Kunststoffen, wie beispielsweise die Erhöhung des Thermoplastenanteils an der Außenschicht des Bauteils durch Herabsetzung des Gehalts an Fasermaterial, die Applikation einer Außenschicht ohne Beeinflussung des inneren Bereichs des thermoplastischen Bauteils, die Erhöhung der Schichtdecke der Lackierung durch zusätzliche Füllerschichten oder stärkerem Decklackauftrag oder die Applikation einer Lackfolie.

Die vorstehend genannten Problematiken hinsichtlich der oft mangelhaften Oberflächenbeschaffenheit von faserverstärkten Thermoplasten und vergleichbare Vorgehensweisen zu deren Verbesserung werden unter anderem auf der Internetseite *www.maschinenmarkt.vogel.de*/*faserverstaerkte-thermoplaste-mit-entwicklungsansaetz en-fuer-class-a-faehige-oberflaechen-a-814*/*,* aufgerufen am 14. Dezember 2016, offenbart.

JP 2010 253714 betrifft ein Verfahren zum Formen eines plattenförmigen faserverstärkten Plastikmaterials in eine Wellenform oder sonstige unebene Form. Das Formen erfolgt, indem ein thermoplastisches Material auf die Ober- und Unterseite des plattenförmigen faserverstärkten Plastikmaterials aufgebracht wird und dann das gesamte Kompositmaterial erwärmt und schließlich geformt wird. Als Fasermaterial können beispielsweise gewebte Strukturen eingesetzt werden.

US 2014/0186584 betrifft ein Verfahren zur Herstellung eines Kompositmaterials aus einer Verstärkungsfaser und einem Thermoplasten mit einer guten Oberflächenerscheinung. Das Kompositmaterial enthält Verstärkungsfasern mit einer Länge im Bereich von 5 mm bis 10 mm. Zur Herstellung wird eine Platte über den Schmelzpunkt bzw. die Glasübergangstemperatur erhitzt und anschließend mit einem Werkzeug, dessen Temperatur unterhalb der Schmelztemperatur bzw. der Glasübergangstemperatur liegt, geprägt.

DE 100 54 490 betrifft ein Verfahren zum Herstellen eines faserverstärkten Kunststoffbauteils mit einem hohen Glanzgrad. Bei diesem Verfahren wird eine Folie auf ein mit Fasern versehenes Kunststoffmaterial aufgetragen. Auf die Folie werden mit einem Werkzeug Stege oder Erhebungen aufgebracht, zwischen denen sich Täler befinden, so dass sich auf der sichtbaren Bauteiloberfläche eine Narbung ausbildet, allerdings ist diese Narbung mit bloßem Auge nicht zu erkennen und erweckt einen glatten Eindruck. Zur Herstellung wird zunächst die Kunststofffolie in das Werkzeug eingelegt und anschließend das Werkzeug geschlossen. In die Werkzeugkavität wird dann das faserverstärkte Kunststoffmaterial eingebracht, das sich daraufhin mit der Kunststofffolie verbindet.

Die Aufgabe der vorliegenden Erfindung ist somit die Bereitstellung eines verbesserten Verfahrens, das die im Stand der Technik beschriebenen Nachteile umgeht.

Diese Aufgabe wurde gelöst durch ein Verfahren zur Erzeugung einer strukturierten Narbung auf der Oberfläche eines mit einem textilen Flächengebilde endlosfaserverstärkten Thermoplasten, enthaltend die Schritte a) bis c):
a) Erhitzen eines Gemisches aus mindestens einem Fasermaterial und mindestens einem Thermoplasten auf eine Temperatur oberhalb der Erweichungstemperatur des Thermoplasten, wobei das mindestens eine Fasermaterial Endlosfasern enthält und in Form eines regelmäßig angeordneten textilen Flächengebildes vorliegt,
b) Verpressen des in Schritt a) erhitzten Gemisches in einem Werkzeug, wobei auf der Innenseite des Werkzeugs eine regelmäßig angeordnete, strukturierte Narbung angebracht ist,
c) Abkühlen des in Schritt b) verpressten Gemisches im Werkzeug auf eine Temperatur unterhalb der Erweichungstemperatur des Thermoplasten unter Bildung der strukturierten Narbung auf der Oberfläche des mit dem textilen Flächengebilde endlosfaserverstärkten Thermoplasten,
wobei die strukturierte Narbung auf der Innenseite des Werkzeugs und das textile Flächengebilde im Werkzeug in Schritt b) so zueinander ausgerichtet sind, dass sich das regelmäßig angeordnete textile Flächengebilde und die regelmäßig angeordnete strukturierten Narbung auf der Innenseite des Werkzeugs überlagern, wobei die regelmäßig angeordnete strukturierte Narbung so auf die Innenseite des Werkzeugs angebracht ist, dass sie auf der Sichtseite des endlosfaserverstärkten Thermoplasten eine strukturierte Narbung erzeugt, und wobei die strukturierte Narbung in dem Werkzeug durch Ätzen, Laserstrukturierung, Sandstrahlen, Formfräsen oder Erodieren hergestellt wird, wodurch die Innenseite des Werkzeugs eine Oberfläche mit Vertiefungen und/oder Erhöhungen aufweist.

Durch das erfindungsgemäße Verfahren kann eine strukturierte Narbung auf die Oberfläche von mit einem textilen Flächengebilde endlosfaserverstärkten Thermoplasten aufgebracht werden, die den Eindruck von einer hochwertigeren Oberflächenbeschaffenheit vermittelt, da Unebenheiten auf der Oberfläche aufgrund der strukturierten Narbung nicht mehr wahrgenommen werden. Die strukturierte Narbung der Oberfläche der endlosfaserverstärkten Thermoplasten ist außerdem auf einfache Weise durchführbar und macht die Verwendung anderer Oberflächenbehandlungen nicht mehr zwingend erforderlich. Fehlstellen auf der Oberfläche der endlosfaserverstärkten Thermoplasten können aufgrund der strukturierten Narbung effektiv kaschiert werden, um das Erscheinungsbild des endlosfaserverstärkten Thermoplasten deutlich zu verbessern.

Die vorliegende Erfindung wird nachfolgend im Detail erläutert.

Unter der Bezeichnung "strukturierte Narbung" werden im Rahmen der vorliegenden Erfindung Strukturierungsmuster, das heißt regelmäßig angeordnete strukturierte Vertiefungen und/oder Erhebungen, auf einer Oberfläche verstanden. Ein Strukturierungsmuster ist aus mindestens einer Struktureinheit aufgebaut.

Unter einer "Struktureinheit" wird im Rahmen der vorliegenden Erfindung die kleinste Einheit in einem Strukturierungsmuster verstanden. Eine Struktureinheit beinhaltet üblicherweise eine definierte Anzahl von Vertiefungen und/oder Erhebungen beliebiger Geometrie, die in sich bzw. zu weiteren Struktureinheiten im Strukturierungsmuster regelmäßig angeordnet sind. Eine solche Struktureinheit kann beispielsweise Karos, Rauten, Rechtecke, Quadrate oder Linien enthalten. Gegebenenfalls können sich Struktureinheiten abwechseln beziehungsweise miteinander kombiniert werden. So sind Muster denkbar, die aus mehreren verschiedenen Linien von unterschiedlicher Stärke (Breite) und/oder Tiefe aufgebaut sind.

Unter der Bezeichnung "regelmäßig angeordnet" werden im Rahmen der vorliegenden Erfindung in festgelegten Abständen wiederkehrende Einheiten verstanden, die vorzugsweise nach einem bestimmten Muster angeordnet sind. Diese Einheiten können Struktureinheiten in der strukturierten Narbung sein oder sich wiederholende Einheiten in textilen Flächengebilden.

Die Abstände zwischen den einzelnen Struktureinheiten einer strukturierten Vertiefung auf einer Oberfläche können beliebige Werte (Größen) annehmen, beispielsweise 300 µm. Vorzugsweise beträgt der Abstand zwischen den einzelnen Struktureinheiten der strukturierten Vertiefungen maximal 1200 µm (Durchschnittswert über das gesamte Muster), insbesondere beträgt der Abstand 50 bis 1200 µm. Die Breite einer Struktureinheit, beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 60 bis 800 µm, mehr bevorzugt 70 bis 600 µm, insbesondere 80 bis 400 µm.

Ebenso können die Vertiefungen als solche (also die Tiefe einer Strukturierung) beliebige Werte (Größen) annehmen. So ist es denkbar, dass in Teilbereichen einer Oberfläche die gleichen Struktureinheiten/Muster enthalten sind, die sich jedoch hinsichtlich ihrer Tiefe unterscheiden. Die Vertiefungen sind (als Durchschnittswert) in aller Regel nicht größer (tiefer) als 25 % der Dicke des faserverstärkten Thermoplasten, wobei dieser Wert gegebenenfalls auch etwas höher ausfallen kann.

In Schritt a) des erfindungsgemäßen Verfahrens wird ein Gemisch aus mindestens einem Fasermaterial und mindestens einem Thermoplasten auf eine Temperatur oberhalb der Erweichungstemperatur des Thermoplasten erhitzt, wobei das mindestens eine Fasermaterial Endlosfasern enthält und in Form eines regelmäßig angeordneten textilen Flächengebildes vorliegt.

Das Gemisch aus dem mindestens einen Fasermaterial und dem mindestens einen Thermoplasten kann grundsätzlich in beliebiger, dem Fachmann als angebracht erscheinenden Form vorliegen. Üblicherweise handelt es sich bei dem Gemisch aus dem mindestens einen Fasermaterial und dem mindestens einen Thermoplasten um ein Faserverbundmaterial, bei dem das mindestens eine Fasermaterial in Form von Endlosfasern vorliegt und der mindestens eine Thermoplast als polymere Matrix das mindestens eine Fasermaterial umgibt. Entsprechende (Endlos-)Faserverbund-materialien sind dem Fachmann allgemein bekannt.

Im Rahmen der vorliegenden Erfindung werden die Bezeichnungen "mit einem textilen Flächengebilde endlosfaserverstärkter Thermoplast" sowie "endlosfaserverstärkter Thermoplast" synonym verwendet.

Vorzugsweise liegt das Gemisch aus dem mindestens einen Fasermaterial und dem mindestens einen Thermoplasten als Halbzeug vor. Unter einem Halbzeug wird im Rahmen der vorliegenden Erfindung ein flächenförmiges Ausgangsmaterial für Thermoformprozesse verstanden, welches einen Kern aus einem textilen Flächengebilde enthält. Das Halbzeug liegt vorzugsweise in Form von extrudierten Folien, Profilen oder Platten vor, besonders bevorzugt als plattenförmiges Halbzeug.

Die Oberfläche eines solchen Halbzeuges weitestgehend eben sein, es ist aber auch je nach Anwendungsbereich möglich, dass die Oberfläche gewölbt ist.

Vorzugsweise weist das Halbzeug eine Dicke im Bereich von 0,1 bis 50 mm, mehr bevorzugt im Bereich von 0,5 bis 25 mm und besonders bevorzugt im Bereich von 1 bis 4 mm auf.

Unter der Bezeichnung "mindestens ein Fasermaterial" wird im Zusammenhang der vorliegenden Erfindung genau ein Fasermaterial als auch eine Mischung aus zwei oder mehreren verschiedenen Fasermaterialien verstanden. Als Fasermaterial können erfindungsgemäß prinzipiell alle dem Fachmann bekannten Fasermaterialien eingesetzt werden.

Erfindungsgemäß enthält das mindestens eine Fasermaterial Endlosfasern. Die Bezeichnungen "Endlosfaser" und "Filament" werden im Rahmen der vorliegenden Erfindung synonym verwendet. Unter der Bezeichnung "Endlosfaser" werden im Rahmen der vorliegenden Erfindung solche Fasern verstanden, die im Gemisch aus dem mindestens einen Fasermaterial und dem mindestens einen Thermoplasten hinsichtlich ihrer Länge nicht unterbrochen sind.

Vorzugsweise enthält das mindestens eine Fasermaterial mindestens 50 Gew.-%, mehr bevorzugt mindestens 75 Gew.-%, noch mehr bevorzugt mindestens 85 Gew.-%, besonders bevorzugt mindestens 98 Gew.-% und ganz besonders bevorzugt 100 Gew.-%, jeweils bezogen auf das Gesamtgewicht des mindestens einen Fasermaterials, Endlosfasern.

Vorzugsweise enthält das mindestens eine Fasermaterial Glasfasern, Naturfasern, Kunststofffasern, Aramidfasern, Kohlenstofffasern, Metallfasern, beispielsweise Stahlfasern oder Kupferfasern, Mineralfasern, beispielsweise Basaltfasern, Borfasern, Kaliumtitanat-fasern, oder Kombinationen daraus. Besonders bevorzugt sind Glasfasern oder Kohlenstofffasern.

Das mindestens eine Fasermaterial weist vorzugsweise einen Faserdurchmesser im Bereich von 1 bis 100 µm, mehr bevorzugt im Bereich von 5 bis 50 µm und besonders bevorzugt im Bereich von 7 bis 30 µm auf.

Das mindestens eine Fasermaterial liegt in Form eines regelmäßig angeordneten textilen Flächengebildes vor. Im Rahmen der vorliegenden Erfindung werden unter einem textilen Flächengebilde beispielsweise flächige Waren verstanden, die aus textilen Waren wie Fasern oder Fäden erzeugt sind. Regelmäßig angeordnete textile Flächengebilde weisen in festgelegten Abständen wiederkehrende Einheiten auf, die vorzugsweise nach einem bestimmten Muster angeordnet sind. Entsprechende textile Flächengebilde sind dem Fachmann prinzipiell bekannt.

Regelmäßig angeordnete textile Flächengebilde zeichnen sich üblicherweise durch eine gerichtete Struktur auf, in der das mindestens eine Fasermaterial an einer definierten Anzahl an Orientierungsrichtungen ausgerichtet ist. Insbesondere weisen regelmäßig angeordnete textile Flächengebilde keine regellosen und ungeordnet verteilten Fasern auf, wie es beispielsweise in Vlies oder Filz der Fall ist.

Vorzugsweise ist das regelmäßig angeordnete textile Flächengebilde ein Fasergewebe, Fasergelege, Fasergestrick, Fasergewirk oder Fasergeflecht oder liegt in Form einer unidirektionalen oder bidirektionalen Faserstruktur aus parallelen Fasern vor.

Besonders bevorzugt ist das textile Flächengebilde ein Fasergewebe oder ein Fasergelege, ganz besonders bevorzugt ein Fasergewebe.

Als Fasergewebe kann prinzipiell jedes beliebige Fasergewebe eingesetzt werden. Bevorzugte Gewebearten umfassen eine Leinwandbindung, Köperbindung oder Atlasbindung. Mehr bevorzugt werden Fasergewebe in Köperbindung eingesetzt.

Das mindestens eine Fasermaterial hat vorzugsweise eine Feinheit im Bereich von 100 bis 10 000 tex, mehr bevorzugt im Bereich von 400 bis 5 000 tex und besonders bevorzugt im Bereich von 800 bis 2 000 tex.

Weiterhin weist das mindestens eine Fasermaterial vorzugsweise eine Strukturdichte im Bereich von 1 bis 10 Rovings/cm, mehr bevorzugt im Bereich von 1,5 bis 5 Rovings/cm und ganz besonders bevorzugt im Bereich von 2 bis 4 Rovings/cm auf.

Das mindestens eine Fasermaterial kann aus einer oder mehreren Lagen von textilen Flächengebilden aufgebaut sein. Vorzugsweise ist das mindestens eine Fasermaterial aus mindestens einer und höchstens 30 Lagen, mehr bevorzugt mindestens zwei Lagen und höchstens 10 Lagen, besonders bevorzugt mindestens zwei Lagen und höchstens fünf Lagen von textilen Flächengebilden aufgebaut.

Werden Lagen parallel ausgerichteter Fasern gedreht zueinander eingesetzt, sind die einzelnen Lagen vorzugsweise bidirektional aufgebaut und jeweils um den Winkel von 90° zueinander gedreht. Bei Einsatz von drei Lagen oder eines Vielfachen von drei Lagen ist es auch möglich, die einzelnen Lagen um einen Winkel von 60° zueinander gedreht anzuordnen und bei vier Lagen oder Vielfachen von vier Lagen um einen Winkel von 45° zueinander gedreht.

Weiterhin ist es auch möglich, mehr als eine Lage an Fasern mit gleicher Ausrichtung vorzusehen. Hierbei können ebenfalls Lagen zueinander verdreht sein, wobei die Anzahl an Lagen mit Fasern gleicher Ausrichtung in jeder der Ausrichtungen der Fasern unterschiedlich sein können, beispielsweise vier Lagen in einer ersten Richtung und eine Lage in einer dazu, zum Beispiel um 90° gedrehten Richtung (bidirektionaler Aufbau mit Vorzugsrichtung). Darüber hinaus ist auch ein quasi isotroper Aufbau bekannt, bei dem die Fasern einer zweiten Lage um 90° gedreht zur Faser einer ersten Lage angeordnet sind und weiterhin Fasern einer dritten Lage um 45° gedreht zu den Fasern der zweiten Lage.

Vorzugsweise weist jede Lage des mindestens einen Fasermaterials ein Flächengewicht im Bereich von 100 bis 1000 g/m², mehr bevorzugt im Bereich von 200 bis 800 g/m² und ganz besonders bevorzugt im Bereich von 500 bis 700 g/m² auf.

In einer besonders bevorzugten Ausführungsform weist das textile Flächengebilde eine Feinheit im Bereich von 800 bis 2 000 tex und eine Strukturdichte im Bereich von 2 bis 4 rovings/cm auf und jede Lage des textilen Flächengebildes weist ein Flächengewicht im Bereich von 500 bis 700 g/m² auf.

In einer ganz besonders bevorzugten Ausführungsform ist das textile Flächengebilde ein Fasergewebe aus Glasfasern mit einem Faserdurchmesser im Bereich von 10 bis 30 µm, das in Köperbindung 2/2 vorliegt, eine Feinheit im Bereich von 800 bis 2 000 tex und eine Strukturdichte im Bereich von 2 bis 4 rovings/cm aufweist und jede Lage des textilen Flächengebildes weist ein Flächengewicht im Bereich von 500 bis 700 g/m² auf.

Das Gemisch aus dem mindestens einen Fasermaterial und dem mindestens einen Thermoplasten enthält vorzugsweise mindestens 20 Vol.-%, besonders bevorzugt mindestens 45 Vol.-%, des mindestens einen Fasermaterials, bezogen auf das Gesamtvolumen des Gemischs.

Das Gemisch aus dem mindestens einen Fasermaterial und dem mindestens einen Thermoplasten enthält darüber hinaus höchstens 80 Vol.-%, vorzugsweise höchstens 60 Vol.-%, des mindestens einen Fasermaterials, bezogen auf das Gesamtvolumen des Gemischs.

In einer bevorzugten Ausführungsform enthält das Gemisch aus dem mindestens einen Fasermaterial und dem mindestens einen Thermoplasten 20 bis 80 Vol.-%, vorzugsweise 45 bis 60 Vol.-% des mindestens einen Fasermaterials, bezogen auf das Gesamtvolumen des Gemischs, wobei das Gesamtvolumen des Gemischs stets 100 Vol.-% ergibt.

Das Gemisch enthält weiterhin mindestens einen Thermoplasten. Unter der Bezeichnung "mindestens ein Thermoplast" wird im Zusammenhang der vorliegenden Erfindung genau ein Thermoplast als auch eine Mischung aus zwei oder mehr verschiedenen Thermoplasten verstanden. Als Thermoplast kann erfindungsgemäß prinzipiell jeder dem Fachmann bekannte Thermoplast eingesetzt werden.

Im Rahmen der vorliegenden Erfindung wird unter dem Begriff "Thermoplast" folgendes verstanden. Thermoplaste sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden.

Vorzugsweise ist der mindestens eine Thermoplast ein temperaturstabiler Thermoplast mit einer Erweichungstemperatur größer als 100°C.

Vorzugsweise ist der mindestens eine Thermoplast ausgewählt aus Polyolefinen, Polyvinylpolymeren, Styrol-Polymeren, Styrol-Acrylnitril-Copolymeren, Acrylnitril-Butadien-Styrolen (ABS), Polymeren der (Meth)Acrylsäure, Polyacrylaten, Polymethylmethacrylaten, Polyacrylamiden, Polycarbonaten, Polyalkylenoxiden, Polyphenylenethern, Polyphenylensulfiden, Polyethersulfonen, Polyetherketonen, Polyimiden, Polychinoxalinen, Polychinolinen, Polybenzimidazolen, Polyamiden, Polyestern, Polyurethanen, Polyisocyanaten, Polyolen, Polyetherpolyolen, Polyesterpolyolen oder Mischungen davon.

Geeignete Polyolefine umfassen beispielsweise beispielsweise Polyethylen (PE), Polypropylen (PP) oder Polybutylen (PB) sowie halogenierte Polyolefine wie Polytetrafluoroethylen.

Polyvinylpolymere, die sich für das erfindungsgemäße Verfahren eignen umfassen zum Beispiel Polyvinylhalogenide, Polyvinylacetate, Polyvinylether, Polyvinylalkohole, Polyvinyllactame oder Polyvinylamine.

Als Polyacrylate eignen sich beispielsweise Polymere der Alkylester, Alkali- und Erdalkalimetalle der Acrylsäure und der Methacrylsäure.

Polyalkylenoxide umfassen beispielsweise Polyoxymethylen (POM) oder Polyethylenglykole (PEG),
Geeignete Polyamide umfassen beispielsweise Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

Polyester, die sich für das erfindungsgemäße Verfahren eignen umfassen zum Beispiel aliphatische Polyester, sowie aromatische Polyester wie Polyethylenterephthalat (PET) oder Polybutylenterephthalat (PBT).

Besonders bevorzugt ist der mindestens eine Thermoplast ausgewählt aus Polyethylen (PE), Polypropylen (PP), Polyoxymethylen (POM), Polyethylenterephthalat (PET), Polybutylenterephthalat (PBT), Acrylnitril-Butadien-Styrol (ABS), Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

Ganz besonders bevorzugt ist der mindestens eine Thermoplast ausgewählt aus Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

Das Gemisch aus dem mindestens einen Fasermaterial und dem mindestens einen Thermoplasten enthält vorzugsweise mindestens 20 Vol.-%, besonders bevorzugt mindestens 40 Vol.-%, des mindestens einen Thermoplasten, bezogen auf das Gesamtvolumen des Gemischs.

Das Gemisch aus dem mindestens einen Fasermaterial und dem mindestens einen Thermoplasten enthält darüber hinaus höchstens 80 Vol.-%, vorzugsweise höchstens 55 Vol.-%, des mindestens einen Thermoplasten, bezogen auf das Gesamtvolumen des Gemischs.

In einer bevorzugten Ausführungsform enthält das Gemisch aus dem mindestens einen Fasermaterial und dem mindestens einen Thermoplasten 20 bis 80 Vol.-%, vorzugsweise 45 bis 55 Vol.-% des mindestens einen Thermoplasten, bezogen auf das Gesamtvolumen des Gemischs, wobei das Gesamtvolumen des Gemischs stets 100 Vol.-% ergibt.

Zur Einstellung der Eigenschaften des endlosfaserverstärkten Thermoplasten, auf den die regelmäßig angeordnete strukturierte Narbung angebracht wird, kann das Gemisch aus dem mindestens einen Fasermaterial und dem mindestens einen Thermoplasten zusätzlich Additive enthalten. Im Rahmen der vorliegenden Erfindung umfassen sämtliche Ausführungsformen, in denen auf ein Gemisch aus dem mindestens einen Fasermaterial und dem mindestens einen Thermoplasten Bezug genommen wird, auch Gemische, die neben dem mindestens einen Fasermaterial und dem mindestens einen Thermoplasten auch Additive enthalten.

Geeignete Additive umfassen beispielsweise Stabilisatoren, Schmiermittel, Nukleierungsmittel, Farbstoffe, Härter, Weichmacher, Blends mit anderen Polymeren oder beliebige andere, dem Fachmann bekannten Additive.

Geeignete Stabilisatoren umfassen beispielsweise sterisch gehinderte Phenole, sekundäre aromatische Amine, Hydrochinone, Resorcinole, Vitamin E oder dazu strukturell ähnliche Verbindungen, Kupfer(I)-Halogenide, nickelhaltige Radikalfänger, Triazine, Benzoxazinone, Benzotriazole, Benzophenone, Benzoate, Formamidine, Propenoate, aromatische Propandione, Benzimidazole, cycloaliphatische Ketone, Formanilide, Cyanoacrylate, Benzopyranone oder Salicylate.

Schmiermittel umfassen beispielsweise Stearinsäuren, Stearylalkohole, Stearylester, Ethylen-bis(stearamid) (EBS), höhere Fettsäuren und deren Derivate sowie Fettsäuregemische mit Fettsäuren, welche 12 bis 30 Kohlenstoffatome aufweisen, Silikonöle, oligomeres Isobutylen oder ähnliche Verbindungen.

Geeignete Nukleierungsmittel umfassen beispielsweise Natriumphenylphosphinate, Aluminiumoxide, Siliciumoxide, Nylon-2.2 und Talk.

Als Farbstoffe können beispielsweise organische Farbstoffe wie Nigrosin oder Pigmente wie Ultramarinblau, Phthalocyanine, Titandioxid, Cadmiumsulfide, Cadmiumselenide, Pigmentruß oder Derivate der Perylentetracarbonsäure eingesetzt werden.

Weichmacher umfassen beispielsweise Dioctylphthalate, Dibenzylphthalate, Butylbenzylphthalate, N-(n-butyl)-Benzylsulfonamide, ortho- und para-Tolylethylsulfonamide oder kohlenwasserstoffhaltige Öle.

Der Anteil des mindestens einen Additivs im Gemisch aus dem mindestens einen Fasermaterial und dem mindestens einen Thermoplasten beträgt vorzugsweise 0 bis 10 Vol.-%, besonders bevorzugt 0 bis 5 Vol.-%, bezogen auf das Gesamtvolumen des Gemisches.

In einer bevorzugten Ausführungsform enthält das Gemisch aus dem mindestens einen Fasermaterial und dem mindestens einen Thermoplasten
20 bis 80 Vol.-% des mindestens einen Thermoplasten,
20 bis 80 Vol.-% des mindestens einen Fasermaterials, und
0 bis 10 Vol.-% weiterer Additive,
wobei das Gesamtvolumen des Gemischs stets 100 Vol.-% ergibt.

In einer weiter bevorzugten Ausführungsform enthält das Gemisch aus dem mindestens einen Fasermaterial und dem mindestens einen Thermoplasten
40 bis 55 Vol.-% des mindestens einen Thermoplasten
45 bis 60 Vol.-% des mindestens einen Fasermaterials, und
0 bis 5 Vol.-% weiterer Additive,
wobei das Gesamtvolumen des Gemischs stets 100 Vol.-% ergibt.

Das Gemisch aus dem mindestens einen Fasermaterial und dem mindestens einen Thermoplasten kann auf prinzipiell beliebige Weise nach dem Fachmann bekannten Verfahren hergestellt werden. Beispielsweise kann das Fasermaterial mit dem mindestens einen Thermoplasten getränkt werden, um das Gemisch aus dem mindestens einen Fasermaterial und dem mindestens einen Thermoplasten zu erzeugen.

Alternativ dazu kann das Fasermaterial auch mit Monomeren zur Herstellung des mindestens einen Thermoplasten getränkt werden und die Monomere werden anschließend, zum Beispiel durch Erwärmen, polymerisiert, um das Gemisch aus dem mindestens einen Fasermaterial und dem mindestens einen Thermoplasten zu erzeugen. Geeignete Monomere zur Herstellung des mindestens einen Thermoplasten sind dem Fachmann grundsätzlich bekannt.

Weitere Möglichkeiten zur Herstellung des Gemischs aus dem mindestens einen Fasermaterial und dem mindestens einen Thermoplasten umfassen beispielsweise eine Pulverimprägnierung, das Laminieren des mindestens einen Fasermaterials mit Thermoplast-Folien oder das Mischen des mindestens einen Fasermaterials mit Thermoplastfasern und anschließendes Schmelzen und Verpressen der Polymerfolien beziehungsweise der Thermoplastfasern.

In Schritt a) wird das Gemisch aus dem mindestens einen Fasermaterial und dem mindestens einen Thermoplasten auf eine Temperatur oberhalb der Erweichungstemperatur des mindestens einen Thermoplasten erhitzt.

Im Rahmen der vorliegenden Erfindung wird unter der "Erweichungstemperatur" die Temperatur bzw. der Temperaturbereich verstanden, bei dem amorphe bzw. (teil)kristalline Thermoplaste vom glasigen oder hartelastischen Zustand in einen schmelzflüssigen beziehungsweise gummielastischen Zustand übergehen. Dieser Übergang ist verbunden mit einer Verminderung der Härte entsprechender Stoffe. Die Erweichungstemperatur entspricht bei (teil)kristallinen Thermoplasten dem Schmelzpunkt beziehungsweise dem Schmelzbereich des Thermoplasten. Bei amorphen Thermoplasten entspricht die Erweichungstemperatur der Glasübergangstemperatur beziehungsweise dem Glasübergangsbereich der amorphen Thermoplasten.

Das Erhitzen des Gemisches aus dem mindestens einen Fasermaterial und dem mindestens einen Thermoplasten kann auf beliebige, dem Fachmann bekannte Weise erfolgen.

Das Gemisch aus dem mindestens einen Fasermaterial und dem mindestens einen Thermoplasten kann vorzugsweise in dem gleichen Werkzeug auf eine Temperatur oberhalb der Erweichungstemperatur des Thermoplasten erhitzt werden, in dem auch Schritt b) des erfindungsgemäßen Verfahrens durchgeführt wird.

Alternativ dazu kann das Gemisch aus dem mindestens einen Fasermaterial und dem mindestens einen Thermoplasten auch zunächst in einer separaten Vorrichtung auf eine Temperatur oberhalb der Erweichungstemperatur des Thermoplasten erhitzt werden und anschließend wird das erhitzte Gemisch in das Werkzeug zum Verpressen gemäß Schritt b) überführt.

Weiterhin ist es auch möglich, das Gemisch aus dem mindestens einen Fasermaterial und dem mindestens einen Thermoplasten zunächst in einer separaten Vorrichtung auf eine Temperatur unterhalb der Erweichungstemperatur des mindestens einen Thermoplasten vorzuwärmen und anschließend in das Werkzeug zu überführen, in dem auch Schritt b) des erfindungsgemäßen Verfahrens durchgeführt wird, wobei das Gemisch in dem Werkzeug auf eine Temperatur oberhalb der Erweichungstemperatur des mindestens einen Thermoplasten erhitzt wird.

Falls das Gemisch vor dem Einlegen in das Werkzeug erhitzt wird, so erfolgt das Erhitzen vorzugsweise in einem Ofen, besonders bevorzugt in einem Umluftofen, oder mittels Infrarotstrahlung.

Vorzugsweise wird das Gemisch aus dem mindestens einen Fasermaterial und dem mindestens einen Thermoplasten in Schritt a) auf eine Temperatur erhitzt, die mindestens 5°C, mehr bevorzugt mindestens 10°C und insbesondere bevorzugt mindestens 15°C oberhalb der Erweichungstemperatur des mindestens einen Thermoplasten liegt.

Für den Fall, dass der mindestens eine Thermoplast eine Mischung aus zwei oder mehr verschiedenen Thermoplasten ist, so wird das Gemisch aus dem mindestens einen Fasermaterials und dem mindestens einen Thermoplasten in Verfahrensschritt a) bevorzugt auf eine Temperatur erhitzt, die oberhalb der Erweichungstemperatur des Thermoplasten mit der höchsten Erweichungstemperatur liegt.

Bevorzugt wird das Gemisch aus dem mindestens einen Fasermaterial und dem mindestens einen Thermoplasten auf eine Temperatur im Bereich von 100° bis 450 °C, mehr bevorzugt im Bereich von 120° bis 400 °C und besonders bevorzugt im Bereich von 140° bis 350 °C erhitzt.

In Verfahrensschritt b) wird das in Schritt a) erhitzte Gemisch in einem Werkzeug verpresst, wobei auf der Innenseite des Werkzeugs eine regelmäßig angeordnete strukturierte Narbung angebracht ist.

Das im Verfahren gemäß der vorliegenden Erfindung benutzte Werkzeug als solches ist dem Fachmann bekannt. Vorzugsweise ist es ein kombiniertes Press- und Spritzgusswerkzeug, in welchem zum Beispiel sowohl verformt (verpresst), geheizt sowie angespritzt (zum Beispiel mit einem Polyamid) werden kann. Hierfür kann das Werkzeug sowohl Kavitäten zur Aufnahme des Gemisch aus dem mindestens einen Fasermaterial und dem mindestens einen Thermoplasten, als auch Kavitäten zur Aufnahme eines Spritzgusspolymers aufweisen. Vorzugsweise hat ein solches Werkzeug mehrere solcher Kavitäten.

Das Verpressen als solches ist dem Fachmann bekannt. Bei dem Verpressen wird die Geometrie des endlosfaserverstärkten Thermoplasten durch Druckeinwirkung verändert, beispielsweise durch vollständiges oder zumindest teilweises Verbiegen. Die Geometrie des aus Schritt b) resultierenden endlosfaserverstärkten Thermoplasten wird durch die Form des Werkzeugs bestimmt.

Das Verpressen in Schritt b) wird vorzugsweise bei einem Druck von mindestens 3 bar absolut, mehr bevorzugt mindestens 5 bar absolut und besonders bevorzugt mindestens 10 bar absolut durchgeführt.

In einer bevorzugten Ausführungsform wird Schritt b) bei einem Druck im Bereich von 3 bis 50 bar absolut, mehr bevorzugt zwischen 5 und 30 bar absolut und besonders bevorzugt zwischen 10 und 25 bar absolut durchgeführt.

Die Temperatur in Schritt b) befindet sich vorzugsweise in einem Bereich zwischen 100 °C und 450 °C, bevorzugt zwischen 120 °C und 400 °C und insbesondere bevorzugt zwischen 140 °C und 350 °C. Durch den Pressvorgang kann die Temperatur des Gemisches aus dem mindestens ein Fasermaterial und dem mindestens einen Thermoplasten weiter steigen.

Falls das Gemisch aus dem mindestens einen Fasermaterial und dem mindestens einen Thermoplasten in Schritt a) im Werkzeug erhitzt wurde, erfolgt das Verpressen in Schritt b) vorzugsweise unter der gleichen Temperatur wie in Schritt a).

Das Verpressen in Schritt b) stellt den eigentlichen Fertigungsschritt für die Herstellung der strukturierten Narbung auf der Oberfläche des endlosfaserverstärkten Thermoplasten dar. Die Dicke des endlosfaserverstärkten Thermoplasten wird in Schritt b) vorzugsweise auf einen Bereich von 0,1 mm bis 10 mm, mehr bevorzugt von 0,5 mm bis 3 mm eingestellt, oder Schritt b) ist ein weiterer Schritt nachgeschaltet, in dem die Dicke des Fertigteils auf einen Bereich von 0,5 bis 10 mm, mehr bevorzugt 0,5 mm bis 3 mm durch Pressen eingestellt wird.

Das im erfindungsgemäßen Verfahren eingesetzte Werkzeug weist auf der Innenseite eine regelmäßig angeordnete strukturierte Narbung auf. Die strukturierte Narbung ist auf der Innenseite der Werkzeugwand angebracht, wodurch die Form der strukturierten Narbung der Innenseite des Werkzeugs durch das Verpressen auf die Oberfläche des endlosfaserverstärkten Thermoplasten abgeformt wird, vorzugsweise wird die Form der strukturierten Narbung vollständig auf die Oberfläche des mit dem textilen Flächengebilde endlosfaserverstärkten Thermoplasten abgeformt.

Dem Fachmann ist klar, dass die strukturierte Narbung auf der Innenseite des Werkzeugs durch Vertiefungen und/oder Erhebungen dahingehend strukturiert ist, dass eine Abformung auf die Oberfläche des endlosfaserverstärkten Thermoplasten ermöglicht wird. Soll die Oberfläche des endlosfaserverstärkten Thermoplasten beispielsweise eine kreisförmige Vertiefung aufweisen, so muss die Innenseite des Werkzeugs eine dazu analoge strukturierte Narbung als Erhebung aufweisen und umgekehrt.

Die strukturierte Narbung kann durch prinzipiell beliebige Methoden auf der Innenseite des Werkzeugs angebracht werden. Im Rahmen der vorliegenden Erfindung wird die strukturierte Narbung in dem Werkzeug durch Ätzen, Laserstrukturierung, Sandstrahlen, Formfräsen oder Erodieren hergestellt, wodurch die Innenseite des Werkzeugs eine Oberfläche mit Vertiefungen und/oder Erhöhungen aufweist.

Vorzugsweise erzeugt die strukturierte Narbung auf der Innenseite des Werkzeugs auf der Oberfläche des mit dem textilen Flächengebilde endlosfaserverstärkten Thermoplasten eine strukturierte Narbung in Form eines Strukturierungsmusters, das aus mindestens einer Struktureinheit aufgebaut ist. Prinzipiell können durch die strukturierte Narbung auf der Innenseite des Werkzeugs beliebige Strukturierungsmuster auf der Oberfläche der endlosfaserverstärkten Thermoplaste erzeugt werden.

Die regelmäßig angeordnete strukturierte Narbung wird so auf die Innenseite des Werkzeugs aufgebracht, dass sie auf der Sichtseite des endlosfaserverstärkten Thermoplasten eine strukturierte Narbung erzeugt wird.

Erfindungsgemäß sind die regelmäßig angeordnete strukturierte Narbung auf der Innenseite des Werkzeugs und das textile Flächengebilde im Werkzeug in Schritt b) so zueinander ausgerichtet, dass sich das regelmäßige angeordnete textile Flächengebilde und die regelmäßige angeordnete strukturierten Narbung auf der Innenseite des Werkzeugs überlagern. Vorzugsweise überlagern sich das regelmäßige angeordnete textile Flächengebilde und die regelmäßige angeordnete strukturierten Narbung auf der Innenseite des Werkzeugs dadurch vollständig.

Dem Fachmann ist dabei klar, dass die regelmäßig angeordnete strukturierte Narbung auf der Innenseite des Werkzeugs und das textile Flächengebilde in Schritt b) vorzugsweise dergestalt zueinander ausgerichtet sind, dass sich die gewünschte strukturierte Narbung auf der Oberfläche des endlosfaserverstärkten Thermoplasten auf dessen Sichtseite befindet. Eine Überlagerung des textilen Flächengebildes und der strukturierten Narbung auf der Innenseite des Werkzeugs in Bereichen des endlosfaserverstärkten Thermoplasten, die sich bei der späteren Anwendung, beispielsweise als Bauteile in Fahrzeugen, nicht im Sichtbereich befinden, ist daher nicht zwingend erforderlich.

Üblicherweise weist die Oberfläche des endlosfaserverstärkten Thermoplasten aufgrund des textilen Flächengebildes Unebenheiten in Form von Erhebungen und Vertiefungen auf, die durch die strukturierte Narbung auf der Oberfläche des endlosfaserverstärkten Thermoplasten kaschiert werden sollen.

Vorzugsweise werden daher die regelmäßig angeordnete strukturierte Narbung auf der Innenseite des Werkzeugs und das textile Flächengebilde im Werkzeug in Schritt b) so zueinander ausgerichtet, dass die strukturierte Narbung auf der Innenseite des Werkzeugs die Unebenheiten auf der Oberfläche des endlosfaserverstärkten Thermoplasten möglichst vollständig überlagert. Abhängig vom Strukturierungsmuster der regelmäßig angeordneten strukturierten Narbung auf der Innenseite des Werkzeuges werden in Schritt b) auf die Oberfläche des endlosfaserverstärkten Thermoplasten Erhebungen und/oder Vertiefungen abgeformt.

In Schritt c) wird das in Schritt b) verpresste Gemisch im Werkzeug auf eine Temperatur unterhalb der Erweichungstemperatur des Thermoplasten abgekühlt unter Bildung der strukturierten Narbung auf der Oberfläche des mit dem textilen Flächengebilde endlosfaserverstärkten Thermoplasten.

Das Abkühlen in Schritt c) kann nach beliebigen, dem Fachmann bekannten Methoden erfolgen. Beispielsweise kann das Abkühlen mittels einer internen Kühlung innerhalb des Werkzeuges erfolgen oder es erfolgt eine langsame Abkühlung des in Schritt b) verpressten Gemisches, indem das Werkzeug nicht weiter auf Temperaturen oberhalb der Erweichungstemperatur des Thermoplasten geheizt wird.

In Schritt c) wird der endlosfaserverstärkte Thermoplast vorzugsweise vollständig ausgehärtet, gegebenenfalls kann aber auch ein nur teilweise ausgehärteter endlosfaserverstärkter Thermoplast nach dem Verpressen aus dem Werkzeug entnommen werden. Dem Fachmann ist die Entnahme des endlosfaserverstärkten Thermoplasten aus dem Werkzeug auch unter der Bezeichnung "Entformung" bekannt.

Die Temperatur des Werkzeugs während der Entformung kann dabei prinzipiell beliebige Werte annehmen, vorausgesetzt, dass die Temperatur unterhalb der Erweichungstemperatur des endlosfaserverstärkten Thermoplasten liegt.

Vorzugsweise wird das in Schritt b) verpresste Gemisch im Werkzeug auf eine Temperatur abgekühlt, die mindestens 5°C, mehr bevorzugt mindestens 10°C und insbesondere bevorzugt mindestens 15°C unterhalb der Erweichungstemperatur des mindestens einen Thermoplasten liegt.

Für den Fall, dass der mindestens eine Thermoplast eine Mischung aus zwei oder mehr verschiedenen Thermoplasten ist, so wird das Gemisch aus dem mindestens einen Fasermaterials und dem mindestens einen Thermoplasten in Verfahrensschritt a) bevorzugt auf eine Temperatur abgekühlt, die unterhalb der Erweichungstemperatur des Thermoplasten mit der niedrigsten Erweichungstemperatur liegt.

Bevorzugt wird das in Schritt b) verpresste Gemisch auf eine Temperatur im Bereich von -20° bis 40 °C, mehr bevorzugt im Bereich von 0° bis 35 °C und besonders bevorzugt im Bereich von 10° bis 30 °C erhitzt.

Im Anschluss an die Entformung können gegebenenfalls weitere Verfahrensschritte durchgeführt werden, beispielsweise eine Weiterverarbeitung des endlosfaserverstärkten Thermoplasten in Abhängigkeit von der gewünschten Verwendung.

Die strukturierte Narbung auf der Oberfläche des endlosfaserverstärkten Thermoplasten ist vorzugsweise aus sich wiederholenden und regelmäßig angeordneten Struktureinheiten aufgebaut, die je nach Bedarf verschieden angeordnet sein können.

Die erfindungsgemäße strukturierte Narbung auf der Oberfläche des endlosfaserverstärkten Thermoplasten ist vorzugsweise insbesondere keine unregelmäßig angeordnete Narbung wie es beispielsweise bei einer Ledernarbung der Fall ist.

Das Strukturierungsmuster der strukturierten Narbung auf der Oberfläche des endlosfaserverstärkten Thermoplasten kann Struktureinheiten enthalten, die prinzipiell eine beliebige Anzahl an Erhebungen und/oder Vertiefungen aufweisen können.

Das Strukturierungsmuster der strukturierten Narbung auf der Oberfläche des endlosfaserverstärkten Thermoplasten kann beispielsweise regelmäßig angeordnete Struktureinheiten enthalten, die Erhebungen aufweisen.

Weiterhin kann das Strukturierungsmuster der strukturierten Narbung auf der Oberfläche des endlosfaserverstärkten Thermoplasten regelmäßig angeordnete Struktureinheiten enthalten, die Vertiefungen aufweisen.

Außerdem sind auch Strukturierungsmuster denkbar, die regelmäßig angeordnete Struktureinheiten enthalten, die Erhebungen und Vertiefungen aufweisen.

In einer Ausführungsform sind die Struktureinheiten mindestens zweier benachbarter Strukturierungsmuster der strukturierten Narbung auf der Oberfläche des endlosfaserverstärkten Thermoplasten so ausgebildet, dass alle Struktureinheiten des einen Strukturierungsmusters invertiert zu den Struktureinheiten des benachbarten Strukturierungsmusters angeordnet sind, so dass die bei Betrachtung bei Tageslicht oder künstlicher Beleuchtung entstehenden Reflexionen der Oberfläche beim Betrachter den Eindruck eines Höhenunterschiedes zwischen benachbarten Gruppen erzeugen.

Bevorzugt grenzt in dieser Ausführungsform jedes (erste) Strukturierungsmuster der strukturierten Narbung auf der Oberfläche des endlosfaserverstärkten Thermoplasten an mehrere benachbarte weitere Strukturierungsmuster an und alle Struktureinheiten jedes benachbarten Strukturierungsmusters sind invertiert zu den Struktureinheiten des (ersten) Strukturierungsmusters angeordnet. Damit lassen sich regelmäßige, makroskopische Muster und Strukturen erzeugen, beispielsweise ein Schachbrettmuster oder ein gerastertes Muster ohne Rapportbildung.

Weiterhin bevorzugt verlaufen in dieser Ausführungsform die Übergänge zwischen benachbarten Strukturierungsmustern der strukturierten Narbung auf der Oberfläche des endlosfaserverstärkten Thermoplasten durch die Struktureinheiten als solche und der Übergang jedes Strukturierungsmusters bildet durch die sprungartig invertierten Einzelelemente eine ausgeprägt sichtbare Kante zwischen den Strukturierungsmustern.

Ebenso ist aber auch denkbar, dass in dieser Ausführungsform die Übergänge zwischen benachbarten Strukturierungsmustern der strukturierten Narbung auf der Oberfläche des endlosfaserverstärkten Thermoplasten durch die Struktureinheiten als solche verlaufen und die Übergänge zwischen den Strukturierungsmustern kontinuierlich sind.

Im Rahmen der vorliegenden Erfindung wird unter der Bezeichnung "kontinuierlicher Übergang" ein Übergang zwischen zwei oder mehr Strukturierungsmustern verstanden, bei dem mit bloßem Auge keine Grenzen zwischen den Strukturierungsmustern erkennbar sind.

In einer Ausführungsform wird vor der Durchführung von Schritt a) auf das Gemisch aus dem mindestens einen Fasermaterial und dem mindestens einen Thermoplasten eine Thermoplast-Folie aufgetragen.

Die Thermoplast-Folie kann prinzipiell eine beliebige Dicke aufweisen. Generell wird die Dicke der Thermoplast-Folie so gewählt, dass Unebenheiten auf der Oberfläche des endlosfaserverstärkten Thermoplasten nicht mehr zu erkennen sind. Vorzugsweise weist die Thermoplast-Folie eine Dicke im Bereich von 40 bis 250 µm, besonders bevorzugt im Bereich von 50 bis 150 µm, auf.

Die Thermoplast-Folie enthält vorzugsweise mindestens einen Thermoplasten, der ausgewählt ist aus Polyolefinen, Polyvinylpolymeren, Styrol-Polymeren, Styrol-Acrylnitril-Copolymeren, Acrylnitril-Butadien-Styrolen (ABS), Polymeren der (Meth)Acrylsäure, Polyacrylaten, Polymethylmethacrylaten, Polyacrylamiden, Polycarbonaten, Polyalkylenoxiden, Polyphenylenethern, Polyphenylensulfiden, Polyethersulfonen, Polyetherketonen, Polyimiden, Polychinoxalinen, Polychinolinen, Polybenzimidazolen, Polyamiden, Polyestern, Polyurethanen, Polyisocyanaten, Polyolen, Polyetherpolyolen, Polyesterpolyolen oder Mischungen davon.

Besonders bevorzugt enthält die Thermoplast-Folie mindestens einen Thermoplasten ausgewählt aus Polyethylen (PE), Polypropylen (PP), Polyoxymethylen (POM), Polyethylenterephthalat (PET), Polybutylenterephthalat (PBT), Acrylnitril-Butadien-Styrol (ABS), Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

Ganz besonders bevorzugt enthält die Thermoplast-Folie mindestens einen Thermoplasten ausgewählt aus Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

Vorzugsweise enthält die Thermoplast-Folie die gleichen Thermoplasten wie das Gemisch aus dem mindestens einen Fasermaterial und dem mindestens einen Thermoplasten.

Darüber hinaus kann die Thermoplast-Folie weitere Additive enthalten. Geeignete Additive sind dem Fachmann generell bekannt und umfassen die gleichen Additive, die auch in dem Gemisch aus dem mindestens einen Fasermaterial und dem mindestens einen Thermoplasten enthalten sein können.

Die Thermoplast-Folie kann prinzipiell beliebige Schmelzviskositäten aufweisen. Vorzugsweise ist die Schmelzviskosität der Thermoplast-Folie aber höher als die Schmelzviskosität des mindestens einen Thermoplasten in dem in Schritt a) erhitzten Gemisch.

Unter dem Begriff "Schmelzviskosität" wird im Rahmen der vorliegenden Erfindung die Viskosität in der schmelzflüssigen Phase des Thermoplasten an der Erweichungstemperatur des Thermoplasten verstanden. Die Bestimmung der Schmelzviskosität ist dem Fachmann prinzipiell bekannt und erfolgt beispielsweise nach der DIN 53735.

Bevorzugt ist die Schmelzviskosität der Thermoplast-Folie um mindestens 10% und um höchstens 60% höher als die Schmelzviskosität des mindestens einen Thermoplasten in dem in Schritt a) erhitzten Gemisch.

In einer weiteren Ausführungsform enthält das erfindungsgemäße Verfahren einen Schritt d), in dem das in Schritt b) verpresste Gemisch durch Anspritzen mit mindestens einem Spritzgusspolymer funktionalisiert wird.

Das Funktionalisieren als solches ist dem Fachmann bekannt. Hierunter ist vorzugsweise das Anbringen von gewünschten Elementen, zum Beispiel das Anbringen von Verrippungen für Stabilität und Festigkeit, Montagehilfen, Kartentaschen und Ähnlichem, zu verstehen. Diese Elemente werden aus dem Spritzgusspolymer durch Anspritzen des in Schritt b) verpressten Gemisches erhalten.

Das Anspritzen als solches ist dem Fachmann ebenfalls bekannt. Hierbei werden vorzugsweise ein oder mehrere Bereiche der Oberfläche des endlosfaserverstärkten Thermoplasten mit aus Spritzgusspolymer gebildeten Elementen versehen. Geeignete Elemente sind vorstehend bereits im Rahmen des Begriffs "Funktionalisieren" definiert worden. Im Rahmen der vorliegenden Erfindung wird das Anspritzen vorzugsweise so durchgeführt, dass in Schritt d) im Werkzeug vorhandene freie Kavitäten mit dem Spritzgusspolymer gefüllt werden. Diese freien Kavitäten bestimmen die konkrete Formgebung der Elemente, die durch Anspritzen auf die entsprechende Oberfläche des endlosfaserverstärkten Thermoplasten aufgebracht werden.

Das in Schritt d) verwendete Spritzgusspolymer als solches ist dem Fachmann bekannt. Vorzugsweise ist das Spritzgusspolymer ein temperaturstabiler Thermoplast, der identisch ist zu dem mindestens einen Thermoplasten, der in dem in Schritt a) erhitzten Gemisch aus dem mindestens einen Fasermaterial und dem mindestens einen Thermoplasten enthalten ist. Sämtliche bevorzugte Polymere für den mindestens einen Thermoplasten gelten demnach für das in Schritt d) verwendete Spritzgusspolymer entsprechend.

Das Spritzgusspolymer kann außerdem dadurch modifiziert werden, dass das Spritzgusspolymer zu höchstens 70 Gew.-%, vorzugsweise zu höchstens 50 Gew.-%, besonders bevorzugt zu höchstens 30 Gew.-%, bezogen auf das Gesamtgewicht des Spritzgusspolymers, mit Material ausgewählt aus Glasfasern, Kohlefasern, Aramidfasern, Naturfasern, Glaskugeln oder Mischungen davon, verstärkt ist.

Für den Fall, dass das Spritzgusspolymer mit Material verstärkt ist, können die im Werkzeug vorhandenen freien Kavitäten, die mit dem Spritzgusspolymer gefüllt werden, gegebenenfalls ebenfalls eine strukturierte Narbung aufweisen.

Das in Verfahrensschritt d) verwendete Spritzgusspolymer ist in der Regel in Schmelze, wenn es in das Werkzeug eingebracht wird, um das Funktionalisieren durch Anspritzen durchzuführen. Vorzugsweise ist dabei das Spritzgusspolymer auf eine Temperatur von mindestens 160 °C, vorzugsweise auf eine Temperatur von mindestens 250 °C, besonders bevorzugt auf eine Temperatur von mindestens 300 °C aufgeheizt, wenn es in Schritt d) in das Werkzeug eingebracht wird.

Die Reihenfolge (zeitlicher Ablauf), in der die Schritte b), c) und d) durchgeführt werden, ist nicht zwingend festgelegt, sondern kann im Rahmen der nachfolgenden drei Optionen i), ii) und iii) ausgewählt werden. So kann gemäß Option i) Verfahrensschritt d) während der Durchführung von Schritt b) gestartet werden. Ebenso kann gemäß Option ii) Schritt d) erst nach Beendigung des Verfahrensschritts b) und während der Durchführung von Schritt c) gestartet werden oder es wird gemäß Option iii) Verfahrensschritt d) nach der Beendigung des Verfahrensschritts b) und vor der Durchführung von Schritt c) gestartet. Bevorzugt wird Schritt d) nach Beendigung des Verfahrensschritts b) und vor der Durchführung von Schritt c) gestartet.

Die Dauer der Durchführung der einzelnen Schritte b), c) und/oder d) ist prinzipiell frei wählbar und dem Fachmann bekannt. In der Regel werden die einzelnen Schritte b), c) und d) so lange durchgeführt, bis das gewünschte Ereignis eingetreten ist, also in Schritt b) das Verpressen des in Schritt a) erhitzten Gemisches und in Schritt c) das Abkühlen des verpressten Gemisches abgeschlossen ist und in Schritt d) die Oberfläche des faserverstärkten Thermoplasten vollständig an den hierfür vorgesehenen Stellen mit dem Spritzgusspolymer versehen ist.

Nach dem Verpressen in Schritt b), dem Abkühlen in Schritt c) sowie gegebenenfalls nach dem Funktionalisieren in Schritt d) kann der endlosfaserverstärkte Thermoplast aus dem Werkzeug genommen werden.

Ein weiterer Gegenstand der vorliegenden Erfindung ist auch ein mit einem textilen Flächengebilde endlosfaserverstärkter Thermoplast mit einer strukturierten Narbung auf der Oberfläche, der durch das erfindungsgemäße Verfahren erhalten wird.

Endlosfaserverstärkte Thermoplasten, die nach dem erfindungsgemäßen Verfahren hergestellt werden, eignen sich aufgrund der strukturierten Narbung in Sichtbauteilen, beispielsweise in Fahrzeugen.

Ein weiterer Gegenstand der vorliegenden Erfindung ist auch die Verwendung des mit einem textilen Flächengebilde endlosfaserverstärkten Thermoplasten mit einer strukturierten Narbung in Sichtbauteilen, vorzugsweise in Sichtbauteile in Fahrzeugen.

## Patentansprüche

1. Verfahren zur Erzeugung einer strukturierten Narbung auf der Oberfläche eines mit einem textilen Flächengebilde endlosfaserverstärkten Thermoplasten, enthaltend die Schritte a) bis c):
a) Erhitzen eines Gemisches aus mindestens einem Fasermaterial und mindestens einem Thermoplasten auf eine Temperatur oberhalb der Erweichungstemperatur des Thermoplasten, wobei das mindestens eine Fasermaterial Endlosfasern enthält und in Form eines regelmäßig angeordneten textilen Flächengebildes vorliegt,
b) Verpressen des in Schritt a) erhitzten Gemisches in einem Werkzeug, wobei auf der Innenseite des Werkzeugs eine regelmäßig angeordnete, strukturierte Narbung angebracht ist,
c) Abkühlen des in Schritt b) verpressten Gemisches im Werkzeug auf eine Temperatur unterhalb der Erweichungstemperatur des Thermoplasten unter Bildung der strukturierten Narbung auf der Oberfläche des mit dem textilen Flächengebilde endlosfaserverstärkten Thermoplasten,
wobei die strukturierte Narbung auf der Innenseite des Werkzeugs und das textile Flächengebilde im Werkzeug in Schritt b) so zueinander ausgerichtet sind, dass sich das regelmäßige angeordnete textile Flächengebilde und die regelmäßige angeordnete strukturierten Narbung auf der Innenseite des Werkzeugs überlagern, wobei die regelmäßig angeordnete strukturierte Narbung so auf die Innenseite des Werkzeugs angebracht ist, dass sie auf der Sichtseite des endlosfaserverstärkten Thermoplasten eine strukturierte Narbung erzeugt, und wobei die strukturierte Narbung in dem Werkzeug durch Ätzen, Laserstrukturierung, Sandstrahlen, Formfräsen oder Erodieren hergestellt wird, wodurch die Innenseite des Werkzeugs eine Oberfläche mit Vertiefungen und/oder Erhöhungen aufweist.

2. Verfahren gemäß Anspruch 1, **dadurch gekennzeichnet, dass** der Thermoplast ein temperaturstabiler Thermoplast mit einer Erweichungstemperatur größer als 100 °C ist,
vorzugsweise ist der Thermoplast ausgewählt aus Polyolefinen, Polyvinylpolymeren, Styrol-Polymeren, Styrol-Acrylnitril-Copolymeren, Acrylnitril-Butadien-Styrolen (ABS), Polymeren der (Meth)Acrylsäure, Polyacrylaten, Polymethylmethacrylaten, Polyacrylamiden, Polycarbonaten, Polyalkylenoxiden, Polyphenylenethern, Polyphenylensulfiden, Polyethersulfonen, Polyetherketonen, Polyimiden, Polychinoxalinen, Polychinolinen, Polybenzimidazolen, Polyamiden, Polyestern, Polyurethanen, Polyisocyanaten, Polyolen, Polyetherpolyolen, Polyesterpolyolen oder Mischungen davon,
besonders bevorzugt ist der Thermoplast ausgewählt aus Polyethylen (PE), Polypropylen (PP), Polyoxymethylen (POM), Polyethylenterephthalat (PET), Polybutylenterephthalat (PBT), Acrylnitril-Butadien-Styrol (ABS), Polyamid 4.6, Polyamid 6, Polyamid 6.6, Polyamid 6.10, Polyamid 6.12, Polyamid 10.10, Polyamid 11, Polyamid 12, Polyamid 12.12, Polyamid 13.13, Polyamid 66 Polyamid 6.T, Polyamid 9.T, Polyamid MXD.6, Polyamid 6/6.6, Polyamid 6/6.T, Polyamid 6.I/6.T, Polyamid 6/6.6/6.10 oder Mischungen davon.

3. Verfahren gemäß Anspruch 1 oder 2, **dadurch gekennzeichnet, dass**
i) das mindestens eine Fasermaterial mindestens 50 Gew.-%, bevorzugt mindestens 75 Gew.-%, mehr bevorzugt mindestens 85 Gew.-%, besonders bevorzugt mindestens 98 Gew.-% und ganz besonders bevorzugt 100 Gew.-%, jeweils bezogen auf das Gesamtgewicht des mindestens einen Fasermaterials, Endlosfasern enthält, und/oder
ii) das regelmäßig angeordnete textile Flächengebilde ein Fasergewebe, Fasergelege, Fasergestrick, Fasergewirk oder Fasergeflecht ist oder in Form einer unidirektionalen oder bidirektionalen Faserstruktur aus parallelen Fasern vorliegt, und/oder
iii) das Fasermaterial Glasfasern, Naturfasern, Aramidfasern, Kohlenstofffasern, Metallfasern, Polymerfasern, Kaliumtitanatfasern, Borfasern oder Mineralfasern enthält, und/oder
iv) das Gemisch aus dem mindestens einen Fasermaterial und dem mindestens einen Thermoplasten als plattenförmiges Halbzeug vorliegt.

4. Verfahren gemäß einem der Ansprüche 1 bis 3, **dadurch gekennzeichnet, dass**
i) das Gemisch aus dem mindestens einen Fasermaterial und dem mindestens einen Thermoplasten in dem gleichen Werkzeug auf eine Temperatur oberhalb der Erweichungstemperatur des Thermoplasten erhitzt wird in dem Schritt b) durchgeführt wird, oder
ii) das Gemisch aus dem mindestens einen Fasermaterial und dem mindestens einen Thermoplasten zunächst in einer separaten Vorrichtung, vorzugsweise in einem Ofen, oder mittels Infrarot-Strahlung auf eine Temperatur oberhalb der Erweichungstemperatur des Thermoplasten erhitzt wird und anschließend in das Werkzeug zum Verpressen gemäß Schritt b) überführt wird, oder
iii) das Gemisch aus dem mindestens einen Fasermaterial und dem mindestens einen Thermoplasten zunächst in einer separaten Vorrichtung auf eine Temperatur unterhalb der Erweichungstemperatur des mindestens einen Thermoplasten vorgewärmt wird, anschließend in das gleiche Werkzeug überführt wird, in dem Schritt b) durchgeführt wird, und in dem Werkzeug auf eine Temperatur oberhalb der Erweichungstemperatur des mindestens einen Thermoplasten erhitzt wird.

5. Verfahren gemäß einem der Ansprüche 1 bis 4, **dadurch gekennzeichnet, dass**
i) das mindestens eine Fasermaterial mit dem mindestens einen Thermoplast getränkt wird, um das Gemisch aus dem mindestens einen Fasermaterial und dem mindestens einen Thermoplasten zu erzeugen, oder
ii) das Fasermaterial mit Monomeren zur Herstellung des mindestens einen Thermoplasten getränkt wird und die Monomere anschließend polymerisiert werden, um das Gemisch aus dem mindestens einen Fasermaterial und dem mindestens einen Thermoplasten zu erzeugen.

6. Verfahren gemäß einem der Ansprüche 1 bis 5,
**dadurch gekennzeichnet,**
**dass** die Form der strukturierten Narbung auf der Innenseite des Werkzeugs durch das Verpressen auf die Oberfläche des mit dem textilen Flächengebilde endlosfaserverstärkten Thermoplasten abgeformt wird, vorzugsweise wird die Form der strukturierten Narbung vollständig auf die Oberfläche des mit dem textilen Flächengebilde endlosfaserverstärkten Thermoplasten abgeformt.

7. Verfahren gemäß einem der Ansprüche 1 bis 6, **dadurch gekennzeichnet, dass** die strukturierte Narbung auf der Innenseite des Werkzeugs auf der Oberfläche des mit dem textilen Flächengebilde endlosfaserverstärkten Thermoplasten eine strukturierte Narbung in Form eines Strukturierungsmusters erzeugt, das aus mindestens einer Struktureinheit aufgebaut ist.

8. Verfahren gemäß Anspruch 7, **dadurch gekennzeichnet, dass**
i) das Strukturierungsmuster der strukturierten Narbung auf der Oberfläche des endlosfaserverstärkten Thermoplasten regelmäßig angeordnete Struktureinheiten enthält, die Erhebungen aufweisen, und/oder
ii) das Strukturierungsmuster der strukturierten Narbung auf der Oberfläche des endlosfaserverstärkten Thermoplasten regelmäßig angeordnete Struktureinheiten enthält, die Vertiefungen aufweisen, und/oder
iii) das Strukturierungsmuster der strukturierten Narbung auf der Oberfläche des endlosfaserverstärkten Thermoplasten regelmäßig angeordnete Struktureinheiten enthält, die Erhebungen und Vertiefungen aufweisen.

9. Verfahren gemäß Anspruch 7 oder 8, **dadurch gekennzeichnet, dass**
i) die Struktureinheiten mindestens zweier benachbarter Strukturierungsmuster der strukturierten Narbung auf der Oberfläche des endlosfaserverstärkten Thermoplasten so ausgebildet sind, dass alle Struktureinheiten des einen Strukturierungsmusters invertiert zu den Struktureinheiten des benachbarten Strukturierungsmusters angeordnet sind, und/oder
ii) die Übergänge zwischen benachbarten Strukturierungsmustern der strukturierten Narbung auf der Oberfläche des endlosfaserverstärkten Thermoplasten durch die Struktureinheiten als solche verlaufen und die Übergänge zwischen den Strukturierungsmustern kontinuierlich sind.
iii) die Übergänge zwischen benachbarten Strukturierungsmustern der strukturierten Narbung auf der Oberfläche des endlosfaserverstärkten Thermoplasten durch die Struktureinheiten als solche verlaufen und die Übergänge jedes Strukturierungsmusters durch die invertierten Einzelelemente eine ausgeprägt sichtbare Kante zwischen den Strukturierungsmustern bilden.

10. Verfahren gemäß einem der Ansprüche 1 bis 9, **dadurch gekennzeichnet, dass** das Gemisch aus dem mindestens einen Fasermaterial und dem mindestens einen Thermoplasten
i) 20 bis 80 Vol-%, vorzugsweise 40 bis 55 Vol-%, des mindestens einen Thermoplasten enthält, und/oder
ii) 20 bis 80 Vol-%, vorzugsweise 45 bis 60 Vol-%, des mindestens einen Fasermaterials enthält, und/oder
ii) 0 bis 10 Vol-%, vorzugsweise 0 bis 5 Vol.-%, weiterer Additive enthält, wobei das Gesamtvolumen des Gemischs stets 100 Vol.-% ergibt.

11. Verfahren gemäß einem der Ansprüche 1 bis 10, **dadurch gekennzeichnet, dass**
i) vor der Durchführung von Schritt a) auf das Gemisch aus dem mindestens einen Fasermaterial und dem mindestens einen Thermoplasten eine Thermoplast-Folie aufgetragen wird, und/oder
ii) die Thermoplast-Folie die gleichen Thermoplasten enthält wie das Gemisch aus dem mindestens einen Fasermaterial und dem mindestens einen Thermoplasten, und/oder
iii) die Schmelzviskosität der Thermoplast-Folie um mindestens 10% und um höchstens 60% höher ist als die Schmelzviskosität des mindestens einen Thermoplasten in dem in Schritt a) erhitzten Gemisch.

12. Mit einem textilen Flächengebilde endlosfaserverstärkter Thermoplast mit einer strukturierten Narbung auf der Oberfläche, erhältlich nach einem Verfahren gemäß einem der Ansprüche 1 bis 11.

13. Verwendung eines mit einem textilen Flächengebilde endlosfaserverstärkten Thermoplasten mit einer einer strukturierten Narbung, erhältlich nach einem Verfahren gemäß einem der Ansprüche 1 bis 11, in Sichtbauteilen, vorzugsweise in Sichtbauteilen in Fahrzeugen.

## Claims

1. A process for the production of a structured grain on the surface of a thermoplastic having continuous-fiber reinforcement by a textile sheet, comprising the steps a) to c):
a) heating of a mixture of at least one fiber material and at least one thermoplastic to a temperature above the softening point of the thermoplastic, where the at least one fiber material comprises continuous fibers and takes the form of a regularly arranged textile sheet,
b) pressing, in a mold, of the mixture heated in step a), where a regularly arranged, structured grain has been applied on the internal side of the mold,
c) cooling, in the mold, of the mixture pressed in step b) to a temperature below the softening point of the thermoplastic, with formation of the structured grain on the surface of the thermoplastic having continuous-fiber reinforcement by the textile sheet,
where the structured grain on the internal side of the mold and the textile sheet in the mold have been oriented in relation to one another in step b) in a manner such that the regularly arranged textile sheet and the regularly arranged structured grain on the internal side of the mold are mutually superposed, where the regularly arranged structured grain has been applied onto the internal side of the mold in a manner such that it produces a structured grain on the visible side of the continuous-fiber-reinforced thermoplastic, and where the structured grain is produced in the mold via etching, laser-structuring, sandblasting, profile milling or erosion, as a result of which the internal side of the mold has a surface with depressions and/or elevations.

2. The process according to claim 1, wherein the thermoplastic is a heat-resistant thermoplastic with softening point above 100°C,
the thermoplastic preferably being selected from polyolefins, polyvinyl polymers, styrene polymers, styrene-acrylonitrile copolymers, acrylonitrile-butadiene-styrenes (ABS), polymers of (meth)acrylic acid, polyacrylates, polymethyl methacrylates, polyacrylamides, polycarbonates, polyalkylene oxides, polyphenylene ethers, polyphenylene sulfides, polyether sulfones, polyether ketones, polyimides, polyquinoxalines, polyquinolines, polybenzimidazoles, polyamides, polyesters, polyurethanes, polyisocyanates, polyols, polyether polyols, polyester polyols and mixtures thereof,
the thermoplastic particularly preferably being selected from polyethylene (PE), polypropylene (PP), polyoxymethylene (POM), polyethylene terephthalate (PET), polybutylene terephthalate (PBT), acrylonitrile-butadiene-styrene (ABS), polyamide 4.6, polyamide 6, polyamide 6.6, polyamide 6.10, polyamide 6.12, polyamide 10.10, polyamide 11, polyamide 12, polyamide 12.12, polyamide 13.13, polyamide 66, polyamide 6.T, polyamide 9.T, polyamide MXD.6, polyamide 6/6.6, polyamide 6/6.T, polyamide 6.I/6.T, polyamide 6/6.6/6.10 and mixtures thereof.

3. The process according to claim 1 or 2, wherein
i) the at least one fiber material comprises, based in each case on the total weight of the at least one fiber material, at least 50% by weight of continuous fibers, preferably at least 75% by weight, more preferably at least 85% by weight, particularly preferably at least 98% by weight and very particularly preferably 100% by weight, and/or
ii) the regularly arranged textile sheet is a woven fiber fabric, laid fiber scrim, knitted fiber fabric or braided fiber fabric, or takes the form of a unidirectional or bidirectional fiber structure made of parallel fibers, and/or
iii) the fiber material comprises glass fibers, natural fibers, aramid fibers, carbon fibers, metal fibers, polymer fibers, potassium titanate fibers, boron fibers or mineral fibers, and/or
iv) the mixture of the at least one fiber material and the at least one thermoplastic takes the form of semifinished sheet.

4. The process according to any of claims 1 to 3, wherein
i) the mixture of the at least one fiber material and the at least one thermoplastic is heated to a temperature above the softening point of the thermoplastic in the same mold in which step b) is carried out, or
ii) the mixture of the at least one fiber material and the at least one thermoplastic is initially heated to a temperature above the softening point of the thermoplastic in a separate device, preferably in an oven, or by means of infrared radiation, and is then transferred into the mold for the pressing procedure according to step b), or
iii) the mixture of the at least one fiber material and the at least one thermoplastic is initially preheated to a temperature below the softening point of the at least one thermoplastic in a separate device, then is transferred into the same mold in which step b) is carried out, and in the mold is heated to a temperature above the softening point of the at least one thermoplastic.

5. The process according to any of claims 1 to 4, wherein
i) the at least one fiber material is saturated with the at least one thermoplastic to produce the mixture of the at least one fiber material and the at least one thermoplastic, or
ii) the fiber material is saturated with monomers for the production of the at least one thermoplastic, and the monomers are then polymerized to produce the mixture of the at least one fiber material and the at least one thermoplastic.

6. The process according to any of claims 1 to 5, wherein the pressing procedure casts the shape of the structured grain on the internal side of the mold onto the surface of the thermoplastic having continuous-fiber reinforcement by the textile sheet, it being preferable that the shape of the structured grain is fully cast onto the surface of the thermoplastic having continuous-fiber reinforcement by the textile sheet.

7. The process according to any of claims 1 to 6, wherein the structured grain on the internal side of the mold produces, on the surface of the thermoplastic having continuous-fiber reinforcement by the textile sheet, a structured grain in the form of a structuring pattern composed of at least one structure unit.

8. The process according to claim 7, wherein
i) the structuring pattern of the structured grain on the surface of the continuous-fiber-reinforced thermoplastic comprises regularly arranged structure units having elevations, and/or
ii) the structuring pattern of the structured grain on the surface of the continuous-fiber-reinforced thermoplastic comprises regularly arranged structure units having depressions, and/or
iii) the structuring pattern of the structured grain on the surface of the continuous-fiber-reinforced thermoplastic comprises regularly arranged structure units having elevations and depressions.

9. The process according to claim 7 or 8, wherein
i) the configuration of the structure units of at least two adjacent structuring patterns of the structured grain on the surface of the continuous-fiber-reinforced thermoplastic is such that the arrangement of all of the structure units of one of the structuring patterns is inverted in relation to the structure units of the adjacent structuring pattern, and/or
ii) the transitions between adjacent structuring patterns of the structured grain on the surface of the continuous-fiber-reinforced thermoplastic run through the structure units per se, and the transitions between the structuring patterns are continuous, and/or
iii) the transitions between adjacent structuring patterns of the structured grain on the surface of the continuous-fiber-reinforced thermoplastic run through the structure units per se, and, by virtue of the inverting of the individual elements, the transitions associated with each structuring pattern form a distinctly visible edge between the structuring patterns.

10. The process according to any of claims 1 to 9, wherein the mixture of the at least one fiber material and the at least one thermoplastic
i) comprises from 20 to 80% by volume, preferably from 40 to 55% by volume, of the at least one thermoplastic, and/or
ii) comprises from 20 to 80% by volume, preferably from 45 to 60% by volume, of the at least one fiber material, and/or
iii) comprises from 0 to 10% by volume, preferably from 0 to 5% by volume, of other additives,
where the entire volume of the mixture always provides 100% by volume.

11. The process according to any of claims 1 to 10, wherein
i) before step a), a thermoplastic film is applied to the mixture of the at least one fiber material and the at least one thermoplastic, and/or
ii) the thermoplastic film comprises the same thermoplastics as the mixture of the at least one fiber material and the at least one thermoplastic, and/or
iii) the melt viscosity of the thermoplastic film is higher by at least 10% and by at most 60% than the melt viscosity of the at least one thermoplastic in the mixture heated in step a).

12. A thermoplastic having continuous-fiber reinforcement by a textile sheet and having a structured grain on the surface, obtainable by a process according to any of claims 1 to 11.

13. The use of a thermoplastic having continuous-fiber reinforcement by a textile sheet and having a structured grain, obtainable by a process according to any of claims 1 to 11, in visible components, preferably in visible components in vehicles.

## Revendications

1. Procédé pour la production d'un grainage structuré sur la surface d'un thermoplaste renforcé par des fibres continues avec une structure textile plate, contenant les étapes a) à c) :
a) le chauffage d'un mélange d'au moins un matériau fibreux et d'au moins un thermoplaste à une température supérieure à la température de ramollissement du thermoplaste, l'au moins un matériau fibreux contenant des fibres continues et se présentent sous forme d'une structure textile plate agencée de façon régulière,
b) la compression du mélange chauffé dans l'étape a) dans un outil, un grainage structuré, agencé de façon régulière, étant disposé sur le côté intérieur de l'outil,
c) le refroidissement du mélange comprimé dans l'étape b) dans l'outil à une température inférieure à la température de ramollissement du thermoplaste avec formation du grainage structuré sur la surface du thermoplaste renforcé par des fibres continues avec la structure textile plate,
le grainage structuré sur le côté intérieur de l'outil et la structure textile plate étant orientés l'un par rapport à l'autre dans l'outil dans l'étape b) de telle sorte que la structure textile plate agencée de façon régulière et le grainage structuré agencé de façon régulière se chevauchent sur le côté intérieur de l'outil, le grainage structuré agencé de façon régulière étant disposé sur le côté intérieur de l'outil de telle sorte qu'il produise un grainage structuré sur le côté visible du thermoplaste renforcé par des fibres continues, et le grainage structuré étant fabriqué dans l'outil par gravure, structuration laser, sablage, fraisage ou érosion, le côté intérieur de l'outil présentant ainsi une surface munie de creux et/ou d'élévations.

2. Procédé selon la revendication 1, **caractérisé en ce que** le thermoplaste est un thermoplaste stable en température ayant une température de ramollissement supérieure à 100 °C,
le thermoplaste est de préférence choisi parmi les polyoléfines, les polymères de polyvinyle, les polymères de styrène, les copolymères de styrène-acrylonitrile, les acrylonitrile-butadiène-styrènes (ABS), les polymères de l'acide (méth)acrylique, les polyacrylates, les polyméthacrylates de méthyle, les polyacrylamides, les polycarbonates, les polyoxydes d'alkylène, les polyéthers de phénylène, les polysulfures de phénylène, les polyéther-sulfones, les polyéther-cétones, les polyimides, les polyquinoxalines, les polyquinolines, les polybenzimidazoles, les polyamides, les polyesters, les polyuréthanes, les polyisocyanates, les polyols, les polyéther-polyols, les polyester-polyols ou les mélanges de ceux-ci,
le thermoplaste est de manière particulièrement préférée choisi parmi le polyéthylène (PE), le polypropylène (PP), le polyoxyméthylène (POM), le polyéthylène téréphtalate (PET), le polybutylène téréphtalate (PBT), l'acrylonitrile-butadiène-styrène (ABS), le polyamide 4.6, le polyamide 6, le polyamide 6.6, le polyamide 6.10, le polyamide 6.12, le polyamide 10.10, le polyamide 11, le polyamide 12, le polyamide 12.12, le polyamide 13.13, le polyamide 66, le polyamide 6.T, le polyamide 9.T, le polyamide MXD.6, le polyamide 6/6.6, le polyamide 6/6.T, le polyamide 6.I/6.T, le polyamide 6/6.6/6.10 ou les mélanges de ceux-ci.

3. Procédé selon la revendication 1 ou 2, **caractérisé en ce que**
i) l'au moins un matériau fibreux contient au moins 50 % en poids, de préférence au moins 75 % en poids, plus préférentiellement au moins 85 % en poids, de manière particulièrement préférée au moins 98 % en poids et de manière tout particulièrement préférée 100 % en poids, à chaque fois par rapport au poids total de l'au moins un matériau fibreux, de fibres continues, et/ou
ii) la structure textile plate agencée de façon régulière est un tissu fibreux, une nappe fibreuse, un tulle fibreux, un tricot fibreux ou un treillis fibreux ou se présente sous la forme d'une structure fibreuse unidirectionnelle ou bidirectionnelle de fibres parallèles, et/ou
iii) le matériau fibreux contient des fibres de verre, des fibres naturelles, des fibres d'aramide, des fibres de carbone, des fibres métalliques, des fibres polymères, des fibres de titanate de potassium, des fibres de bore ou des fibres minérales, et/ou
iv) le mélange de l'au moins un matériau fibreux et de l'au moins un thermoplaste se présente sous la forme d'un semi-fini en forme de plaque.

4. Procédé selon l'une quelconque des revendications 1 à 3, **caractérisé en ce que**
i) le mélange de l'au moins un matériau fibreux et de l'au moins un thermoplaste est chauffé à une température supérieure à la température de ramollissement du thermoplaste dans le même outil que celui dans lequel l'étape b) est réalisée, ou
ii) le mélange de l'au moins un matériau fibreux et de l'au moins un thermoplaste est tout d'abord chauffé à une température supérieure à la température de ramollissement du thermoplaste dans un dispositif séparé, de préférence dans un four, ou au moyen d'un rayonnement infrarouge, et est ensuite transféré dans l'outil pour la compression selon l'étape b), ou
iii) le mélange de l'au moins un matériau fibreux et de l'au moins un thermoplaste est tout d'abord préchauffé à une température inférieure à la température de ramollissement de l'au moins un thermoplaste dans un dispositif séparé, puis est transféré dans le même outil que celui dans lequel l'étape b) est réalisée, et est chauffé à une température supérieure à la température de ramollissement de l'au moins un thermoplaste dans l'outil.

5. Procédé selon l'une quelconque des revendications 1 à 4, **caractérisé en ce que**
i) l'au moins un matériau fibreux est imprégné avec l'au moins un thermoplaste, afin de produire le mélange de l'au moins un matériau fibreux et de l'au moins un thermoplaste, ou
ii) le matériau fibreux est imprégné avec des monomères pour la fabrication de l'au moins un thermoplaste, et les monomères sont ensuite polymérisés, afin de produire le mélange de l'au moins un matériau fibreux et de l'au moins un thermoplaste.

6. Procédé selon l'une quelconque des revendications 1 à 5, **caractérisé en ce que** la forme du grainage structuré sur le côté intérieur de l'outil est moulée par la compression sur la surface du thermoplaste renforcé par des fibres continues avec la structure textile plate, la forme du grainage structuré est de préférence entièrement moulée sur la surface du thermoplaste renforcé par des fibres continues avec la structure textile plate.

7. Procédé selon l'une quelconque des revendications 1 à 6, **caractérisé en ce que** le grainage structuré sur le côté intérieur de l'outil produit, sur la surface du thermoplaste renforcé par des fibres continues avec la structure textile plate, un grainage structuré sous la forme d'un motif de structuration, qui est formé par au moins une unité structurale.

8. Procédé selon la revendication 7, **caractérisé en ce que**
i) le motif de structuration du grainage structuré sur la surface du thermoplaste renforcé par des fibres continues contient des unités structurales agencées de façon régulière, qui comprennent des élévations, et/ou
ii) le motif de structuration du grainage structuré sur la surface du thermoplaste renforcé par des fibres continues contient des unités structurales agencées de façon régulière, qui comprennent des creux, et/ou
iii) le motif de structuration du grainage structuré sur la surface du thermoplaste renforcé par des fibres continues contient des unités structurales agencées de façon régulière, qui comprennent des élévations et des creux.

9. Procédé selon la revendication 7 ou 8, **caractérisé en ce que**
i) les unités structurales d'au moins deux motifs de structuration voisins du grainage structuré sur la surface du thermoplaste renforcé par des fibres continues sont configurées de telle sorte que toutes les unités structurales d'un motif de structuration sont agencées de façon inversée par rapport aux unités structurales du motif de structuration voisin, et/ou
ii) les transitions entre des motifs de structuration voisins du grainage structuré sur la surface du thermoplaste renforcé par des fibres continues s'étendent en tant que telles à travers les unités structurales et les transitions entre les motifs de structuration sont continues,
iii) les transitions entre des motifs de structuration voisins du grainage structuré sur la surface du thermoplaste renforcé par des fibres continues s'étendent en tant que telles à travers les unités structurales et les transitions de chaque motif de structuration à travers les éléments individuels inversés forment un bord visible de façon marquée entre les motifs de structuration.

10. Procédé selon l'une quelconque des revendications 1 à 9, **caractérisé en ce que** le mélange de l'au moins un matériau fibreux et de l'au moins un thermoplaste
i) contient 20 à 80 % en volume, de préférence 40 à 55 % en volume, de l'au moins un thermoplaste, et/ou
ii) contient 20 à 80 % en volume, de préférence 45 à 60 % en volume, de l'au moins un matériau fibreux, et/ou
ii) contient 0 à 10 % en volume, de préférence 0 à 5 % en volume, d'additifs supplémentaires,
le volume total du mélange étant toujours de 100 % en volume.

11. Procédé selon l'une quelconque des revendications 1 à 10, **caractérisé en ce que**
i) avant la réalisation de l'étape a), une feuille de thermoplaste est appliquée sur le mélange de l'au moins un matériau fibreux et de l'au moins un thermoplaste, et/ou
ii) la feuille de thermoplaste contient les mêmes thermoplastes que le mélange de l'au moins un matériau fibreux et de l'au moins un thermoplaste, et/ou
iii) la viscosité à l'état fondu de la feuille de thermoplaste est au moins 10 % et au plus 60 % plus élevée que la viscosité à l'état fondu de l'au moins un thermoplaste dans le mélange chauffé dans l'étape a).

12. Thermoplaste renforcé par des fibres continues avec une structure textile plate, muni d'un grainage structuré sur la surface, pouvant être obtenu par un procédé selon l'une quelconque des revendications 1 à 11.

13. Utilisation d'un thermoplaste renforcé par des fibres continues avec une structure textile plate, muni d'un grainage structuré, pouvant être obtenu par un procédé selon l'une quelconque des revendications 1 à 11, dans des composants visibles, de préférence dans des composants visibles dans des véhicules.
